Europäisches Patentamt

European Patent Office

Office européen des brevets

(11) Publication number: **0 189 236**
**A1**

## (12) EUROPEAN PATENT APPLICATION

(21) Application number: 86200108.8

(22) Date of filing: 24.01.86

(51) Int. Cl.⁴: **F 16 K 27/06,** F 16 K 5/04

(30) Priority: 24.01.85 NL 8500190

(71) Applicant: Koutstaal, Willem, Beetsstraat 282, NL-2524 RH The Hague (NL)

(43) Date of publication of application: 30.07.86 Bulletin 86/31

(72) Inventor: Koutstaal, Willem, Beetsstraat 282, NL-2524 RH The Hague (NL)

(84) Designated Contracting States: BE CH DE FR GB LI NL SE

(74) Representative: Urbanus, Henricus Maria, Ir. et al, c/o Vereenigde Octroolbureaux Nieuwe Parklaan 107, NL-2587 BP 's-Gravenhage (NL)

(54) **Plug cock.**

(57) A plug cock comprising a cylindrical body (1) having in its sidewall at least one supply opening (5) to which pipes are or can be connected, a cylindrical plug (9) arranged in said cylindrical body, said plug having a channel (21) extending therethrough, as well as means for ensuring the sealing of the body and of the plug relative to said body, while an operating member (12) connected to the plug extends through the wall of the body to its exterior. The sealing means at one end of the plug includes a sealing edge (11) projecting from the surface of the plug, and coacting with the flat bottom (4) of the body at that location, or a sealing edge projecting from the bottom of the body and coacting with the flat surface of the plug end at that location, and at the other end of the plug, consists of a bayonet closure (7) or a screw closure ensuring a static sealing of the body at that location through a sealing member (8).

Title: A plug cock.

The invention relates to a plug cock comprising a cylindrical body having in the sidewall of the cylinder at least one supply opening and one discharge opening, said supply and discharge openings being connected or connectable to conduits; a cylindrical plug disposed within said cylindrical body, said plug being provided with a channel extending therethrough, as well as sealing means for sealing said body and said plug relatively to said body, while an operating member connected to the plug is passed through the wall of said body to its exterior.

A similar plug cock is disclosed in U.S. patent 2,314,512 and is described therein particularly with reference to Fig. 7. The known plug cock is destined for incorporation in a system of fuel pipes. In closed position, two valve members received in the wall of the plug, under the influence of a plurality of helical springs, seal the supply and discharge opening, preventing fluid from emerging from the system through the plug cock. It is not quite clear how the sealing is effected in the position wherein the channel constitutes the communication between supply and discharge opening. At the top of the plug there is provided a bearing plate above which sealing rings seem to be arranged around the shaft of the operating member. To the bottom there is attached a washer plate by means of screws. The known cock is effective for a fuel system in which perhaps the plug cock only needs to be operated occasionally. For use in systems wherein a pipe has to be opened and closed very frequently, the known cock is less suitable. With a plug cock employed as a beer tap, for example, opening and closing many times in a short period of time is often quite common. In such a case the cock must permit being opened and closed very rapidly. As the cock is closed, before sealing takes place, there is produced a gradual constriction of the passage. This may create turbulences in the liquid flow which are more violent as the passage is narrower. In beer, such turbulences produce froth. In the case of a slow closure, too much froth is produced. It is therefore desirable to close the tap so quickly that an acceptable quantity of froth is formed.

Moreover, a plug cock for a beer tap and the like should be constructed highly accurately. If, when opening the tap, the channel is not exactly in register with the supply and discharge opening, thresholds will be present in the pipe, which again will result in turbulences and hence in froth formation. The sealing of the plug in the body should furthermore be such as to prevent leakages. Besides, the plug cock should be constructed so as to permit regular disassembly and thorough cleaning. A further important point is that all known plug cocks require a lubricant for them to be operated properly. In pipes for beer, foodstuffs such as milk and the like, a plug cock requiring a lubricant is less desirable.

It is an object of the invention to provide a plug cock that can be operated many times in succession in a short period of time without any objections, and which is constructed with great precision, is properly sealed, operable without a lubricant, and can rapidly be taken apart and, after cleaning, rapidly reassembled.

This object is achieved, according to the invention, with a plug cock of the above described type wherein said sealing means at one end of the plug comprises a sealing edge projecting from the surface of the plug and of the body at that location coacting with the flat bottom, or a sealing edge projecting from the bottom of the body and coacting with the flat surface of the plug end at that location, and, at the other end of the plug, consists of a bayonet closure or a screw closure ensuring a static sealing of the body at that location through a sealing member. Preferably, the sealing edge forms part of a ring of synthetic plastics material disposed on the respective end of the plug in integral relationship therewith. According to a further preferred embodiment, there is provided on the opposite end of the plug, another ring of synthetic plastics material, integral with the plug, with the diameter of the rings being slightly larger than the diameter of the plug so that only said rings make contact with the cylindrical inner wall of the body. Suitably, said rings of synthetic plastics material may consist of glass-fibre-reinforced polytetrafluoroethylene (teflon) or similar wear-resistant material having a very low frictional resistance.

In the plug cock according to the invention, the sealing edge, preferably forming part of the plastics ring, ensures a proper seal on the end of the plug, which, moreover, is easily movable over the flat bottom of the body at that location, certainly when the ring is made of teflon which, as is well known, has a very low frictional resistance. In this construction, any lubricant is entirely superfluous at any rate.

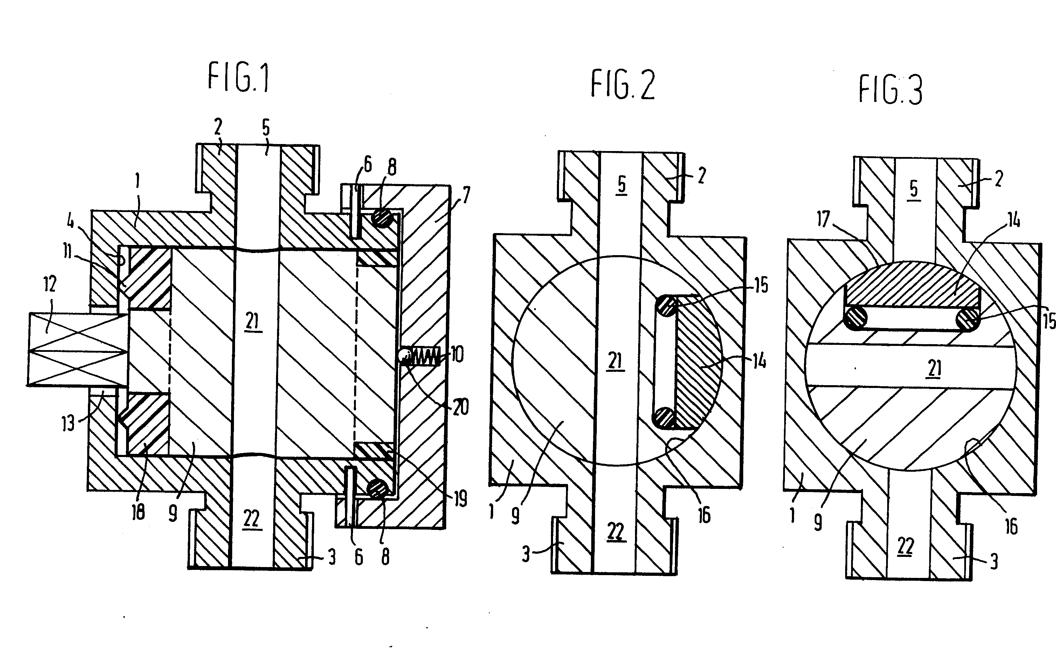

It is observed that in another plug cock disclosed in the above U.S. patent 2,314,512, shown in Fig. 1, having a channel in the plug not lying in a plane perpendicular to the axis, there is provided a bearing plate at the top of the plug, having an annular reinforcing rib. However, this has no sealing function, as shown in the figure, for it does not coact with the bottom of the body at that location.

The advantage of the bayonet closure at the other end of the plug in the plug cock according to the invention is that the plug cock, via the operation of said bayonet closure, can readily and quickly be taken apart and reassembled. Said bayonet closure preferably includes a flat cover having a cylindrical upright rim fitting over the cylindrical wall of the body, whereas the actual seal consists of an O-ring interposed between the body and the cylindrical upright edge of the bayonet closure.

A very good sealing due to the above described means and a high precision in positioning the channel relatively to the supply and discharge openings are achieved in an embodiment of the plug cock according to the invention in which in the centre of the flat cover surface of the bayonet closure, on the inside thereof, there is formed a cavity wherein there is disposed a helical-spring-loaded hold-down member which in the closed position of the body presses the plug against the bottom surface of the body. It should be observed in this respect that the use of a spring for keeping a plug in a plug cock pressed against a sealing ring is known per se e.g. from U.S. patent 2,129,231.

In a further preferred embodiment of the plug cock according to the present invention, the cylindrical wall of the plug contains a cavity accommodating a sealing member of wear-resistant low-friction material conforming substantially to the shape of the removed material of the plug, there being provided underneath the sealing member a statically resilient member exerting pressure in outward direction on the sealing member. The statically resilient member is suitably an O-ring of synthetic plastics material. When the plug is arranged with the channel crosswise between the supply and discharge opening, the sealing member is right in front of the supply opening and is pressed against said opening by said resilient member, thereby entirely sealing the same.

It is observed that U.S. patent 2,314,512 discloses a construction wherein a sealing member is received in a cavity in the plug and can be pressed against a supply or discharge opening under the pressure of a resilient member. However, these are not bodies of wear-resistant low-friction material. Indeed, when operating the cock, there is the risk that material is cut off from these valves, as they are called in the patent, when passing the sharp edges of the supply or discharge openings, which material may subsequently contaminate the pipes. The resilient member in this known construction furthermore is a helical spring, so that during disassembly, there is the risk that the valve in question is litterally"catapulted away". This is not contributory to rapid disassembly and reassembly of the plug cock. Moreover, a construction with a helical spring is not quite possible in a small-size plug cock.

The plug cock according to the invention is highly suitable for use as a beer tap, in which case the body includes one supply and one discharge opening diametrically opposite one another, with the plug including a straight channel. In such case,the channel may have a diameter in the order of 10 mm. A size of 8 mm is a very common size.

The invention will now be described with reference to the drawings, in which:

Fig. 1 is a cross-sectional view of an embodiment of the plug cock according to the invention;

Fig. 2 is a cross-section perpendicular to the cross-section shown in Fig. 1 with the plug cock in the opened position; and

Fig. 3 is a similar view with the cock in the closed position.

Fig. 1 shows an embodiment of the plug cock according to the invention in longitudinal section. This embodiment comprises a cylindrical body 1 open at one end, and closed at the other end by a flat bottom 4. On the cylindrical wall of the body 1, there is provided e.g. a threaded connecting socket 2 for a liquid supply pipe. Through socket 2 and cylinder wall 1 extends the supply opening 5. In the embodiment shown, diametrically opposite socket 2, a connecting socket 3 for instance, likewise threaded, is provided on the cylindrical wall of the body 1. A discharge pipe may be connected to said socket 3. Through socket 3 and cylinder wall 1 extends the discharge opening 22.

In the body 1 there is arranged a cylindrical plug 9. Plug 9 is provided with a channel 21 situated in a plane perpendicular to the axis, which channel 21 can be aligned with the openings 5,22 in the wall of body 1 by rotation of plug 9 in body 1. For operating the plug 9, an operating arm 12 is attached to the plug 9, which arm 12 extends outwardly through an opening 13 in the bottom 4 of the body 1. Outside body 1, the arm 12 is connectable to suitable operating means or mechanisms.

The open end of body 1 containing plug 9 is shut off by a cover 7 having a bayonet mount. Cover 7 basically comprises a flat plate having a cylindrical upright rim of an internal diameter slightly exceeding the external diameter of body 1, so that said upright edge fits around the body 1, as shown in the drawing. Between said upright rim of cover 7 and body 1, there is arranged a sealing O-ring 8. If desired, body 1 may contain a groove wherein O-ring 8 rests, thereby cooperating in retaining O-ring 8 in its correct position. Body 1 may further contain outwardly extending pins 6 coacting with slots, not shown, in the upright rim of cover 7, for providing the bayonet type closure.

In the middle of the flat plate of cover 7, there is provided a cavity wherein a helical spring 10 is disposed. At the end of the spring on the side of the surface of the cover plate, there is provided a solid body 20 e.g. a ball, which, for example, but not necessarily, is secured to spring 10 by suitable means. Owing to the force of the helical spring 10, body 20 is pressed against plug 9, so that the sealing edge 11, to be described hereinafter, is pressed firmly against the flat bottom 4 of body 1.

As shown in the drawing, an annular portion of the material of the plug body (e.g. stainless steel) is removed at both ends of plug 9 and replaced by guide rings 18,19.

Guide rings 18, 19, which are made e.g. of a wear-resistant synthetic plastics material of low frictional resistance, are, for example, affixed to the main body of plug 9 by means of a press fit, forming an integral unit therewith so to speak. The external diameter of the guide rings 18,19 is preferably slightly larger than that of the main body of plug 9. Guide rings 18, 19 thus ensure a good centring of plug 9 in body 1, nevertheless with a minimal frictional surface.

As shown, guide ring 18 is thicker on the side of bottom 4 of body 1, than the ring 19 at the other end of plug 9. This thicker guide ring 18, as shown, is provided with a sealing edge 11 of tapered cross-section, projecting from the surface of plug 9. The end of sealing edge 11, which may be slightly flattened, rests against the flat bottom 4 of body 1 and is kept pressed thereagainst by the action of the above-mentioned helical spring 10 in the bottom of bayonet closure 7. Thus effective sealing is ensured. As guide ring 18, like ring 19 at the other end consists of wear-resistant low-friction synthetic plastics material, e.g. glass fibre-reinforced polytetrafluoroethylene (teflon), a practically frictionless rotation of plug 9 in body 1 is nevertheless possible without lubricants being required in any way whatever.

Figs. 2 and 3 show a cross-sectional view of the embodiment of the plug cock shown in Fig. 1 in the opened and in the closed position of the cock, respectively. As shown a sealing member 14 is provided in the cylindrical wall of plug 9. This sealing member 14, preferably consisting of similar wear-resistant, low-friction synthetic plastics material to the material of guide rings 18,19, is arranged in a cavity provided in the wall of plug 9, and has a form conforming to the form of the material removed for obtaining the cavity. Underneath sealing member 14, there is disposed in the cavity a statically resilient member 15, e.g. an O-ring of synthetic plastics material, exerting pressure on the sealing member 14 so that, in the position shown in Fig. 2, this is pressed against the inner wall 16 of body 1 and, in the position shown in Fig. 3, is pressed against the surface 17 of passage 5. O-ring 15 is so dimensioned that the pressure on sealing member 14 is sufficient to ensure effective sealing of the supply opening 5. As the sealing member 14 is made preferably of hard wear-resistant, low-friction synthetic plastics material, plug 9 can rotate practically effortlessly in spite of the pressure exerted on sealing member 14, and there is no risk that small parts are cut off from member 14 during rotation by the, possibly, sharp edges of the surface 17 of the passage 15 (body 1 consists e.g. of stainless steel), as was the case in known cocks having a comparable sealing member made of metal held down by helical springs or the like. For sealing a supply opening through which often liquid is supplied under a given pressure, the use of a helical spring would, for that matter, require such a large und powerful spring that no place is available therefor in relatively small plugs. However, the construction according to the present invention renders small plugs quite feasible.

The plug cock according to the present invention can be constructed highly accurately. As in operation, there is practically no wear, it is possible to avoid thresholds in the pipe permanently. This is highly desirable with a view to the avoidance of undesirable froth formation in beer taps. However, the cock according to the invention in particular owing to its ease of disassembly and simplicity of assembly, enabling rapid cleaning, is also very suitable for use in all sorts of pipes for foodstuffs (e.g. milk) and other liquids.

C L A I M S
-----------

1.      A plug cock comprising a cylindrical body having in the sidewall of the cylinder at least one supply opening and one discharge opening, said supply and discharge openings being connected or connectable to conduits; a cylindrical plug arranged in said cylindrical body, said plug having a channel extending therethrough, as well as sealing means for sealing said body and said plug relatively to said body, while an operating member connected to said plug extends through the wall of the body to its exterior, characterized in that said sealing means at the one end of the plug (9) includes a sealing edge (11) projecting from the surface of the plug (9), and coacting with the flat bottom (4) of the body (1) at that location or a sealing edge projecting from the bottom of the body and coacting with the flat surface of the plug end at that location, and at the other end of the plug, consists of a bayonet closure (7) or a screw closure ensuring a static sealing of the body (1) at that location through a sealing member (8).

2.      A plug cock according to claim 1, characterized in that the sealing edge (11) forms part of a ring (18) of synthetic plastics material provided on the respective end of the plug (9) to form an integral whole therewith.

3.      A plug cock according to claim 2, characterized in that at the opposite end of plug (9) there is likewise disposed a ring (19) of synthetic plastics material that is integral with plug (9), with the diameter of the rings (18,19) being slightly larger than that of plug (9), so that only said rings (18,19) make contact with the cylindrical inner wall of the body (1).

4.      A plug cock according to claims 2-3, characterized in that the rings (18,19) of synthetic plastics material consist of glass-fibre-reinforced PTFE (teflon) or similar wear-resistant material having minimal frictional resistance.

5. A plug cock according to claims 1-4, characterized in that the bayonet closure (7) comprises a flat cover with clyindrical upright rim fitting over the cylindrical wall of the body (1), the sealing member (8) consisting of an O-ring interposed between the body (1) and the cylindrical rim of the bayonet closure (7).

6. A plug cock according to claim 5, characterized in that in the centre of the flat cover surface of the bayonet closure (7), on the inside thereof, there is formed a cavity containing a hold-down member (20) loaded by a helical spring (10), said member in the closed position of body (1) ensuring that plug (9) is pressed against the bottom surface (4) of body (1).

7. A plug cock according to claims 1-6, characterized in that the cylindrical wall of plug (9) contains a cavity wherein there is disposed a sealing member (14) of wear-resistant material having minimal resistance and conforming substantially to the form of the removed material of plug (9), there being provided underneath said sealing member (14) a statically resilient member (15) exerting outward pressure on the sealing member (14).

8. A plug cock according to claim 7, characterized in that the statically resilient member (15) is an O-ring of synthetic plastics material.

9. A plug cock according to claims 1-8, characterized in that the body (1) includes only one supply opening and only one discharge opening diagrammatically opposite one another, said plug (9) being provided with a straight channel (21).

10. A plug cock according to claims 1-9, characterized in that the channel extending through the plug has a diameter in the order of 10 mm.

FIG.1

FIG.2

FIG.3

0189236

1/1

0189236

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-2 718 665 (CLADE) <br> * Whole document * | 1,6,9 | F 16 K 27/06 <br> F 16 K 5/04 |
| A | US-A-2 840 109 (WADLEIGH) <br> * Column 3, line 34 - column 5, line 68 * | 1,3-5 | |
| D,A | US-A-2 129 231 (PARKER) <br> * Whole document * | 1,6 | |
| D,A | US-A-2 314 512 (PARKER) <br> * Figures 1-8 * | 1,7 | |

TECHNICAL FIELDS
SEARCHED (Int. Cl.4)

F 16 K

The present search report has been drawn up for all claims

| Place of search | Date of completion of the search | Examiner |
|---|---|---|
| THE HAGUE | 24-03-1986 | VERELST P.E.J. |